# EUROPÄISCHE PATENTSCHRIFT

(11) **EP 3 274 581 B1**
(45) Veröffentlichungstag und Bekanntmachung des Hinweises auf die Patenterteilung: **07.04.2021**
(21) Anmeldenummer: 16703157.4
(22) Anmeldetag: 05.02.2016
(51) Int. Cl.: F02M 59/36, F02M 59/44, F02M 59/46

(54) **KRAFTSTOFF-HOCHDRUCKPUMPE MIT EINEM ELEKTROMAGNETISCH BETÄTIGTBAREM MENGENSTEUERVENTIL ALS EINLASSVENTIL, ZUR STEUERUNG DER FÖRDERMENGE DER KRAFTSTOFF-HOCHDRUCKPUMPE**
HIGH-PRESSURE FUEL PUMP WITH AN ELECTROMAGNETICALLY ACTUATED RATE CONTROL VALVE AS AN INLET VALVE IN PARTICULAR FOR CONTROLLING THE DELIVERY RATE OF THE HIGH-PRESSURE FUEL PUMP
POMPE À CARBURANT HAUTE PRESSION AVEC SOUPAPE DE COMMANDE DE DÉBIT À ACTIONNEMENT ÉLECTROMAGNÉTIQUE COMME SOUPAPE D'ADMISSON EN PARTICULIER DESTINÉE À COMMANDER LE DÉBIT DE REFOULEMENT DE LA POMPE À CARBURANT HAUTE PRESSION

(30) Priorität: 25.03.2015 DE 102015205430
(43) Veröffentlichungstag der Anmeldung: 31.01.2018
(73) Patentinhaber: Robert Bosch GmbH, 70442 Stuttgart (DE)
(72) Erfinder: BUESER, Wolfgang, 71726 Benningen (DE); HALLER, Juergen, 74343 Sachsenheim (DE); ROTH, Heiko, 16372 Bursa (TR); BONN, Ruthard, 74523 Schwaebisch Hall (DE)
(86) Internationale Anmeldenummer: PCT/EP2016/052574
(87) Internationale Veröffentlichungsnummer: WO 2016/150607

(56) Entgegenhaltungen:
- EP-A2- 1 965 069
- EP-A2- 2 554 825
- WO-A1-95/16125
- DE-A1- 10 131 125

## Beschreibung

### Stand der Technik

Die Erfindung betrifft eine Kraftstoff-Hochdruckpumpe mit einem elektromagnetisch betätigbarem Mengensteuerventil als Einlassventil, wie sie beispielsweise aus der EP 2 453 122 A1 bereits grundsätzlich bekannt ist.

Eine weitere Kraftstoff-Hochdruckpumpe ist aus der EP 2 554 825 A2 bekannt. Weiterhin sind Ventile aus der DE 101 31 125 A1 und der WO 95/16125 A1 bekannt.

### Offenbarung der Erfindung

Die Erfindung basiert auf der Erkenntnis, dass an einstückig ausgebildeten Ankerwellen, die in Mengensteuerventilen verwendeten werden, gleichzeitig hohe magnetische Anforderungen und hohe Festigkeitsanforderungen gestellt werden, wobei die Ankerwellen überdies den Randbedingungen einer limitierten Bauteilgröße und Bauteilmasse unterworfen sind.

Durch konventionelle Maßnahmen, wie etwa die Auswahl des Werkstoffes der Ankerwelle können diese Anforderungen und Randbedingungen nur zum Teil gleichzeitig zufriedenstellend erfüllt werden, da Werkstoffe mit guten magnetischen Eigenschaften in der Regel nur eine mäßige Festigkeit aufweisen und umgekehrt.

Es sind insbesondere Mittel zur Erhöhung der Festigkeit der Ankerwelle vorgesehen.

Der Begriff der "Festigkeit" ist vorliegend grundsätzlich weit auszulegen. Beispielsweise kann es sich um eine Kenngröße handeln, die das Widerstandsverhalten der Ankerwelle gegen elastische und/oder plastische Verformung charakterisiert, also beispielsweise Zugfestigkeit, Druckfestigkeit, Kompressionsfestigkeit, Biegefestigkeit, Torsionsfestigkeit, Scherfestigkeit und/oder Schwingfestigkeit. Ferner kann es sich bei der Festigkeit um eine Beständigkeit gegen Verschleiß, insbesondere um eine Härte und/oder um eine Oberflächenhärte, handeln. Der Begriff der Festigkeit kann auch auf die Zeitdauer gerichtet sein, die die Ankerwelle eine bestimmte Belastung ohne Versagen, beispielsweise ohne Bruch, zu ertragen vermag.

Der Begriff "Mittel" ist vorliegend grundsätzlich weit auszulegen. Beispielsweise kann es sich um eine Formgebung oder um eine Materialwahl oder um eine lokale Materialmodifikation, insbesondere im Bereich von Teilen der Oberfläche oder der gesamten Oberfläche der Ankerwelle handeln.

Der Begriff "Erhöhung" meint eine Zunahme, beispielsweise eine Vergrößerung einer Kenngröße. Dies kann insbesondere dahingehend aufgefasst werden, dass ohne festen Ausgangspunkt das Mittel zumindest grundsätzlich geeignet ist, eine Festigkeit der Ankerwelle zu erhöhen. Als Ausgangspunkt der Erhöhung der Festigkeit kann andererseits auch von der Festigkeit der Ankerwelle des aus dem eingangs genannten Stand der Technik bekannten Mengensteuerventils ausgegangen werden.

Erfindungsgemäß weist das Mengensteuerventil ein in axialer Richtung bewegbares Ventilelement zum Öffnen und Schließen des Mengensteuerventils auf. Es kann sich dabei bevorzugt um ein plattenförmiges oder zumindest im Wesentlichen plattenförmiges Ventilelement handeln, das an einem, beispielsweise ringförmigen, Dichtsitz zur Anlage kommen und so das Mengensteuerventil verschließen kann.

Erfindungsgemäß weist die Ankerwelle einen Ankerbereich und einen Nadelbereich auf. Insbesondere ist die Ankerwelle aus dem Nadelbereich und dem Ankerbereich zusammengesetzt, wobei der Nadelbereich und der Ankerbereich insbesondere in axialer Richtung hintereinander angeordnet sind, vorzugsweise koaxial oder zumindest im Wesentlichen koaxial zueinander. Insbesondere können der Nadelbereich und der Ankerbereich zylindrische oder zumindest im Wesentlichen zylindrische Abschnitte der Ankerwelle sein, die insbesondere aneinander einstückig angeformt sind.

Erfindungsgemäß ist ein Durchmesser des Nadelbereichs geringer als ein Durchmesser des Ankerbereichs, beispielsweise höchstens halb so groß. Bevorzugt ist die Länge des Nadelbereichs größer als die Länge des Ankerbereichs, beispielsweise mindestens doppelt so groß.

Erfindungsgemäß sind die Ankerwelle, bzw. der Nadelbereich und der Ankerbereich der Ankerwelle gemeinsam, einstückig ausgebildet. Unter "einstückig ausgebildet" wird vorliegend insbesondere verstanden, dass ein integrales, durchgängiges Werkstück vorliegt, das insbesondere nicht durch Fügen oder Verbinden, sondern insbesondere aus einem Stück geschaffen ist, beispielsweise als Drehteil oder durch metallischen Spritzguss und anschließendes Sintern. An der Ankerwelle sind ferner insbesondere keine weiteren Bauteile fixiert, sodass die Ankerwelle insbesondere einen aus dem Stand der Technik, beispielsweise aus der DE 10 2010 062 451 A1 ebenfalls bekannten, durch Pressen hergestellten Verbund aus Anker und Nadel funktionell vollständig ersetzt.

Erfindungsgemäß ist vorgesehen, dass der Nadelbereich gegenüber dem Ankerbereich einen geringeren Durchmesser aufweist und dass das Mittel eine Verrundung der am Übergang zwischen dem Nadelbereich und dem Ankerbereich befindlichen Kante ist.

Bei der Kante handelt es sich bevorzugt um eine am Übergang zwischen dem Nadelbereich und dem Ankerbereich befindliche Innenkante. Es kann sich beispielsweise um eine 90°-Kante handeln.

Der Begriff "Verrundung" ist grundsätzlich insofern weit auszulegen, dass die betreffende Kante keine scharfkantige Kante ist. Bezüglich des Begriffs "Scharfkantigkeit" wird auf die Norm DIN ISO 13715:2000 verwiesen. Insbesondere wird eine Kante als scharfkantig aufgefasst, wenn sie lediglich Abweichungen von einer ideal scharfen Kante aufweist, die 50 µm oder weniger betragen. Alle anderen Kanten gelten insofern als verrundet, unabhängig davon, ob die tatsächliche Kontur in einem mathematischen Sinn exakt rund ist oder ob sie ausgehend von einer scharfkantigen Kontur einer runden Kontur nur angenähert ist. Insbesondere kann auch eine Fase eine Verrundung darstellen.

Die Verrundung hat die technische Wirkung, dass Biegespannungen zwischen Nadelbereich und Ankerbereich vermindert werden bzw. besser übertragen werden können. Auf diese Weise können Brüche am Übergang zwischen dem Nadelbereich dem Ankerbereich wirkungsvoll vermieden werden.

Es wurde beobachtet, dass sich die Festigkeit der Ankerwelle, insbesondere ihre Fähigkeit, Biegespannungen zu ertragen, besonders gut verbessern lässt, wenn ein Verrundungsradius entlang der Verrundung nicht konstant ist. Erfindungsgemäß ist vorgesehen, dass der Verrundungsradius in Richtung von dem Nadelbereich hin zu dem Ankerbereich abnimmt, wobei die Abnahme in Schritten vorgesehen ist.

Erfindungsgemäß ist nämlich eine erste, dem Nadelbereich zugewandte Teilverrundung mit einem ersten Verrundungsradius vorgesehen und eine zweite, dem Ankerbereich zugewandte Teilverrundung mit einem zweiten Verrundungsradius vorgesehen, wobei der erste Verrundungsradius mindestens fünfmal so groß ist wie der zweite Verrundungsradius. Beispielsweise kann der erste Verrundungsradius größer als 1 mm oder sogar größer als 2 mm sein, während der zweite Verrundungsradius kleiner als 1 mm oder sogar kleiner als 0,6 mm sein kann.

Bei einer rechtwinkligen Kante kann jede der beiden Teilverrundungen einen Übergang um 45° darstellen oder jeweils einen Übergang um mindestens 22,5° darstellen.

Die Verrundung kann insbesondere aus den zwei Teilverrundungen bestehen, wenngleich grundsätzlich auch Verrundungen mit mehr als zwei Teilverrundungen möglich sind, deren Verrundungsradien voneinander zumindest teilweise verschieden sind, und insbesondere in Richtung von dem Nadelbereich hin zu dem Ankerbereich abnehmen.

In einer Weiterbildung der Erfindung ist vorgesehen, dass das Mittel eine zumindest entlang von Teilen der Oberfläche der Ankerwelle vorgesehene Schicht ist, deren Härte größer ist als die Härte eines Grundmaterials der Ankerwelle.

Durch eine solche Schicht kann der Verschleiß der Ankerwelle wirkungsvoll vermindert werden. Überdies wurde in den Untersuchungen der Anmelderin durch die Schicht eine Erhöhung der Schwingfestigkeit, beispielsweise um 20% bis 30% des Ausgangswerts, gemessen.

Bei der Härte kann es sich beispielsweise um eine in der Einheit HV gemessene Kenngröße handeln, die beispielsweise mit einer Prüfkraft von beispielsweise 0,01 kp und einer Belastungszeit von 12 Sekunden gemessen werden kann. Es kann beispielsweise eine so genannte Nanointendation genutzt werden, bei der mit den oben genannten sehr kleinen Lasten Messpunkte in einem Rater mit Abständen von 1µm bis 10µm erfasst werden.

Durch so gemessene Härte kann auf Druckeigenspannungen der Oberfläche des Werkstücks geschlossen werden, die ihrerseits als Maß für die Schwingfestigkeit des Bauteils dienen können.

Die Schicht kann entlang der gesamten Oberfläche der Ankerwelle vorgesehen sein. Insbesondere ist vorgesehen, dass die Schicht zumindest an den Stellen der Oberfläche der Ankerwelle vorgesehen ist, die bei Betrieb des Mengensteuerventils mit anderen Komponenten des Mengensteuerventils, beispielsweise dem Ventilelement oder gehäusefesten Anschlägen, in Anlage kommen, beispielsweise an den Stellen der Oberfläche der Ankerwelle, die in den beiden axialen Aufsichten auf die Ankerwelle sichtbar sind.

Es ist insbesondere vorgesehen, dass die Härte der Schicht mindestens 900 HV, insbesondere mindestens 900 HV0,01, beträgt, oder sogar mindestens 1000 HV, insbesondere mindestens 1000 HV0,01, beträgt. Es ist insbesondere vorgesehen, dass die Härte des Grundmaterials der Ankerwelle deutlich geringer ist, beispielsweise höchstens 400 HV, oder sogar nur höchstens 200 HV, was für ferritische Stähle übliche Werte sind.

Wenngleich es eine Vielzahl von Verfahren gibt, mit denen sich diese Schicht herstellen lässt, sind Niedertemperatur-Diffusionsverfahren bevorzugt, da sie auf die Ankerwelle angewendet werden können, ohne dass sich die Ankerwelle während der Herstellung der Schicht als Ganzes deformiert, beispielsweise verzieht. Bevorzugte Niedertemperatur-Diffusionsverfahren sind Nitrocarburieren und Kolsterisieren. Auf diese Weise resultieren Schichten, in denen ein Kohlenstoff- und/oder Stickstoffgehalt im Vergleich zum Grundmaterial der Ankerwelle erhöht ist. In der Regel treten dabei keine Gefügeveränderungen auf, und die betreffende Schicht ist außer durch Härtemessungen und Elementanalyse in den Schliffbildern durch Verfärbungen, insbesondere bräunliche Verfärbungen, erkennbar. Ferner lässt sich der in der Schicht erhöhte Kohlenstoff- und/oder Stickstoffgehalt anhand der eingebrachten Druckeigenspannungen zumindest grundsätzlich, wenn auch mitunter aufwendig, nachweisen.

Unter Niedertemperatur-Diffusionsverfahren werden vorliegend insbesondere thermochemische Verfahren verstanden, bei denen die Ankerwelle einer, beispielsweise kohlenstoff- und/oder stickstoffhaltigen, Atmosphäre ausgesetzt wird, insbesondere bei Temperaturen unterhalb von 650°C oder sogar unterhalb von 350°C, und bei denen aus der Atmosphäre Atome, beispielsweise Kohlenstoffatome und/oder Stickstoffatome, in eine Randschicht der Ankerwelle und/oder in die Ankerwelle, eindiffundieren.

Die Schicht weist vorzugsweise eine Tiefe von 5 µm bis 50 µm auf, beispielsweise eine Tiefe von 10 µm bis 15 µm. Unterhalb dieser Schicht ist insbesondere das Grundmaterial der Ankerwelle angeordnet.

Bei dem Grundmaterial handelt es vorzugsweise um einen ferritischen Stahl und/oder um einen kaltverfestigten Stahl und/oder um einen magnetischen Stahl. Ferner kann es sich um eine Eisen-Kobalt-Legierung handeln.

Die Masse der Ankerwelle beträgt weniger als 3 Gramm, vorzugsweise sogar weniger als 2 Gramm, sodass eine hohe Dynamik des Mengensteuerventils sichergestellt ist.

Vorteilhafte Weiterbildungen sind in weiteren Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Nachfolgend werden beispielhafte Ausführungsformen der Erfindung unter

Bezugnahme auf die Zeichnung erläutert. In der Zeichnung zeigen:
- Figur 1: ein vereinfachtes Schema eines Kraftstoffeinspritzsystems einer Brennkraftmaschine;
- Figur 2: ein Mengensteuerventil einer erfindungsgemäßen Kraftstoff-Hochdruckpumpe;
- Figur 3: eine Ankerwelle des Mengensteuerventils aus Figur 2;
- Figur 4: ein Schliffbild der Ankerwelle des Mengensteuerventil aus Figur 3.

### Ausführungsformen

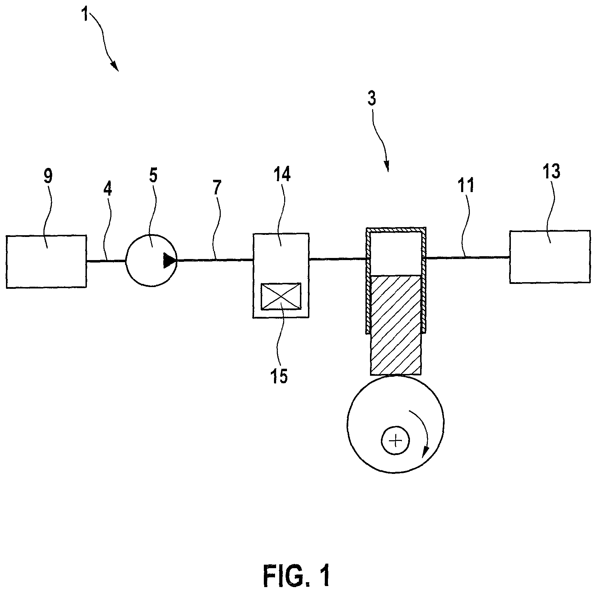

Figur 1 zeigt ein Kraftstoffeinspritzsystem 1 einer Brennkraftmaschine in einer stark vereinfachten Darstellung. Ein Kraftstofftank 9 ist über eine Saugleitung 4, eine Vorförderpumpe 5 und eine Niederdruckleitung 7 mit einer (nicht näher erläuterten) Hochdruckpumpe 3 verbunden. An die Hochdruckpumpe 3 ist über eine Hochdruckleitung 11 ein Hochdruckspeicher 13 ("Common Rail") angeschlossen. Ein Mengensteuerventil 14 mit einer elektromagnetischen Betätigungseinrichtung 15 - im Folgenden als ein Elektromagnet 15 bezeichnet - ist hydraulisch im Verlauf der Niederdruckleitung 7 zwischen der Vorförderpumpe 5 und der Hochdruckpumpe 3 angeordnet. Sonstige Elemente, wie beispielsweise Ventile der Hochdruckpumpe 3, sind in der Figur 1 nicht gezeichnet. Es versteht sich, dass das Mengensteuerventil 14 als Baueinheit mit der Hochdruckpumpe 3 ausgebildet sein kann. Beispielsweise kann das Mengensteuerventil 14 ein Einlassventil der Hochdruckpumpe 3 sein.

Beim Betrieb des Kraftstoffeinspritzsystems 1 fördert die Vorförderpumpe 5 Kraftstoff vom Kraftstofftank 9 in die Niederdruckleitung 7. Dabei bestimmt das Mengensteuerventil 14 die der Hochdruckpumpe 3 zugeführte Kraftstoffmenge.

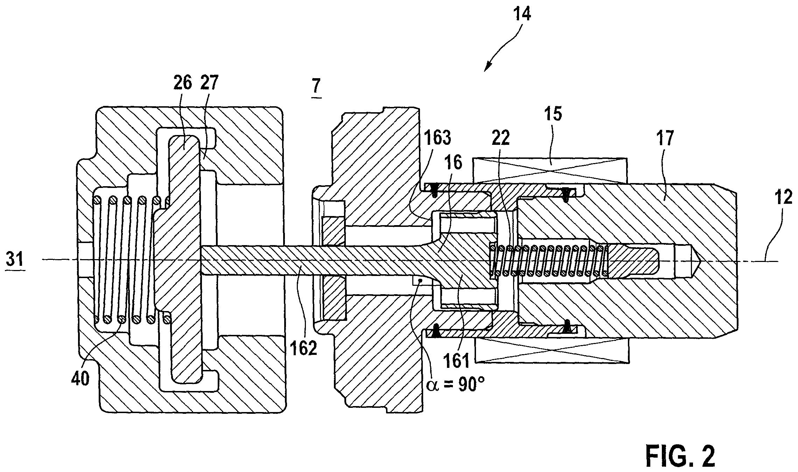

Figur 2 zeigt eine Ansicht des Mengensteuerventils 14 von Figur 1 in einer Schnittdarstellung. Das Mengensteuerventil 14 ist im Wesentlichen rotationssymmetrisch zu einer Längsachse 12 ausgeführt. Das Mengensteuerventil 14 ist in einem nicht gezeichneten Gehäuse einer Hochdruckpumpe 3 festgelegt und bildet das Einlassventil der Hochdruckpumpe 3.

Das Mengensteuerventil 14 umfasst eine über einen Polkern 17 aufgewickelte Magnetspule 15 und eine Ankerwelle 16, wobei zwischen dem Polken 17 und der Ankerwelle 16 eine Ankerfeder 22 eingespannt ist. Durch das Einwirken magnetischer Kräfte und der Rückstellkraft der Ankerfeder 22 kann die Ankerwelle 16 in axialer Richtung zwischen dem Polkern 17 und einem gehäusefesten Anschlag 163 bewegt werden.

Die Ankerwelle 16 besteht aus einem dem Polkern 17 zugewandten Ankerbereich 161 und einem vom Polkern 17 abgewandten Nadelbereich 162 und ist, ohne mit anderen Bauteilen dauerhaft verbunden zu sein, einstückig ausgeführt.

Die Ankerwelle 16 liegt mit ihrer vom Polkern 17 abgewandten Stirnseite an dem Ventilelement 26 des Mengensteuerventils 14 an, und vermag das Mengensteuerventil 14 auf diese Weise gegen die Kraft der Ventilfeder 40 zwangsweise zu öffnen, beispielsweise um einen Rückfluss von Kraftstoff aus einem Arbeitsraum 31 der Hochdruckpumpe 3 in die Niederdruckleitung 7 entgegen der Öffnungsrichtung des Mengensteuerventil 14 zu ermöglichen. In einer speziellen Ausführungsform kann die Ankerwelle zusätzlich einstückig mit dem Ventilelement 26 ausgebildet sein, also dessen Funktionen gleichzeitg übernehmen.

Das Ventilelement 26 hat vorliegend eine im Wesentlichen plattenförmige Gestalt und liegt bei geschlossenem Mengensteuerventil 14 auf einem ringförmigen Dichtsitz 27 auf.

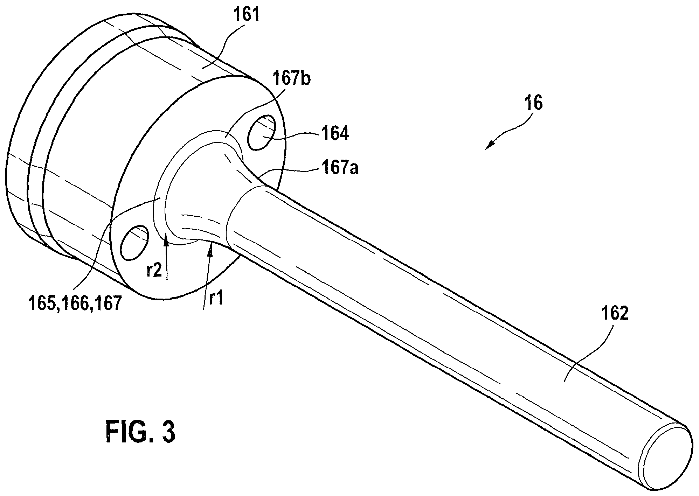

Die Ankerwelle 16 ist in Figur 3 vergrößert perspektivisch dargestellt. Der Ankerbereich 161 und der Nadelbereich 162 haben beide eine im wesentlichen zylindrische Form und sind in axialer Richtung hintereinander angeordnet, wobei der Ankerbereich 161 einen Durchmesser aufweist, der mehr als doppelt so groß ist wie der Durchmesser des Nadelbereichs 162 und wobei der Ankerbereich 161 eine Länge aufweist, die weniger als halb so groß ist wie die Länge des Nadelbereichs 162. Die Ankerwelle 16 hat beispielsweise eine Gesamtlänge im Bereich von 10-30 mm.

Die Ankerwelle 16 weist in diesem Beispiel zwei in axialer Richtung durch den Ankerbereich 161 verlaufende Durchgangsbohrungen 164 auf, deren Funktion darin besteht, bei einer Bewegung der Ankerwelle 16 Kraftstoff durch den Ankerbereich 161 der Ankerwelle 16 leiten zu können.

Am Übergang 165 zwischen dem Nadelbereich 162 und dem Ankerbereich 161 befindet sich eine als Innenkante ausgebildete radial vollständig umlaufende Kante 166, die bei einem Schnitt wie in Figur 2 den Nadelbereich 162 mit dem Ankerbereich 161 unter einem rechten Winkel *α* verbindet. In diesem Beispiel weist die Kante 166 eine Verrundung 167 auf, die sich aus einer ersten Teilverrundung 167a und einer zweiten Teilverrundung 167b zusammensetzt. Jede dieser Teilverrundungen verrundet die rechtwinklige Kante 166 etwa zur Hälfte, also zu 45°.

Die erste Teilverrundung 167a stellt den dem Nadelbereich 162 zugewandten Teil der Verrundung 167 da und weist einen relativ großen Verrundungsradius r1 auf, im Beispiel 6,5 mm. Ihr schließt sich, dem Ankerbereich 161 zugewandt, absatzfrei und knickfrei die zweite Teilverrundung 167b an, die einen relativ kleinen Verrundungsradius r2 aufweist, im Beispiel 0,45 mm.

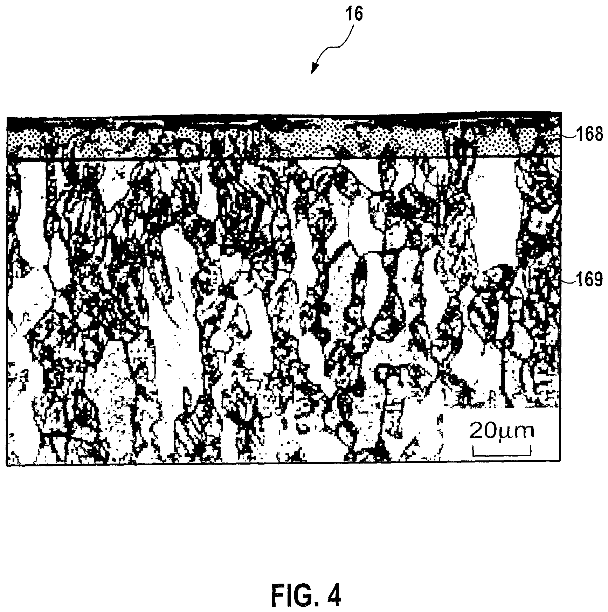

Das Grundmaterial 169 der Ankerwelle 16 ist homogen und besteht aus einem kaltverfestigten ferritischen Werkstoff oder alternativ aus einer Eisen-Kobalt-Legierung. Die Härte des Grundmaterials 169 beträgt 150 HV. An der Oberfläche der Ankerwelle 16 ist eine gehärtete Schicht 168 ausgebildet, die bis in eine Tiefe von 15 µm in die Ankerwelle hineinreicht und die eine Härte von 1000 HV aufweist. Diese Schicht wurde durch ein Niedertemperatur-Diffusionsverfahren, beispielsweise nitrocarburieren oder kolsterisieren, erzeugt. In dieser Schicht ist ein Gehalt an Kohlenstoff und/oder Stickstoff im Vergleich zum Grundmaterial 169 erhöht. In einem Schliff (Figur 4) ist die Schicht 168 als bräunliche Verfärbung bei ansonsten unbeeinflusstem metallurgischem Gefüge erkennbar.

## Patentansprüche

1. Kraftstoffkolbenpumpe mit einem elektromagnetisch betätigbarem Mengensteuerventil (14) als Einlassventil der Kraftstoffkolbenpumpe (3) zur Steuerung der Fördermenge der Kraftstoffkolbenpumpe (3), mit einem Elektromagneten (15), mit einem in einer axialen Richtung bewegbaren Ventilelement (26) zum Öffnen und Schließen des Mengensteuerventils (14) und ferner mit einer Ankerwelle (16) zur Übertragung einer von dem Elektromagneten (15) erzeugten, in axialer Richtung wirkenden Kraft auf das Ventilelement (26), wobei die Ankerwelle (16) einen dem Ventilelement (26) zugewandten Nadelbereich (162) aufweist und einen von dem Ventilelement (26) abgewandten Ankerbereich (161) aufweist, wobei der Nadelbereich (162) und der Ankerbereich (161) gemeinsam einstückig ausgebildet sind und wobei der Nadelbereich (162) gegenüber dem Ankerbereich (161) einen geringeren Durchmesser aufweist, **dadurch gekennzeichnet, dass** eine Verrundung (167) der am Übergang (165) zwischen dem Nadelbereich (162) und dem Ankerbereich (161) befindlichen Kante (166) vorgesehen ist und dass die Verrundung (167) eine erste, dem Nadelbereich (162) zugewandte Teilverrundung (167a) mit einem ersten Verrundungsradius (r1) aufweist und eine zweite, dem Ankerbereich (161) zugewandte Teilverrundung (167b) mit einem zweiten Verrundungsradius (r2) aufweist und dass der erste Verrundungsradius (r1) mindestens den 5-fachen Wert des zweiten Verrundungsradius (r2) aufweist.

2. Kraftstoffkolbenpumpe nach Anspruch 1, **dadurch gekennzeichnet, dass** die erste Teilverrundung (167a) und/oder die zweite Teilverrundung (167b) bezüglich dem Winkel (*α*), unter dem der Nadelbereich (162) an der Kante (166) in den Ankerbereich (161) übergeht, die Kante (166) jeweils mindestens zu einem Viertel verrundet.

3. Kraftstoffkolbenpumpe nach Anspruch 1, **dadurch gekennzeichnet, dass** der Verrundungsradius (r) in Richtung von dem Nadelbereich (162) hin zu dem Ankerbereich (161) abnimmt, insbesondere kontinuierlich abnimmt.

4. Kraftstoffkolbenpumpe nach einem der vorangehenden Ansprüche, **dadurch gekennzeichnet, dass** zumindest entlang von Teilen der Oberfläche der Ankerwelle (16) eine Schicht vorgesehenen ist, deren Härte größer ist als die Härte eines Grundmaterials (169) der Ankerwelle (16), vorgesehen ist.

5. Kraftstoffkolbenpumpe nach Anspruch 4, **dadurch gekennzeichnet, dass** die Härte zumindest entlang der Teile der Oberfläche der Ankerwelle (16) mindestens 900 HV beträgt.

6. Kraftstoffkolbenpumpe nach Anspruch 4 oder 5, **dadurch gekennzeichnet, dass** zumindest entlang der Teile der Oberfläche der Ankerwelle (16) ein Kohlenstoff und/oder Stickstoffgehalt im Vergleich zum Grundmaterial (169) der Ankerwelle (16) erhöht ist.

7. Kraftstoffkolbenpumpe nach einem der Ansprüche 4 bis 6, **dadurch gekennzeichnet, dass** die Schicht (168) mittels eines Niedertemperatur-Diffusionsprozesses, insbesondere mittels Nitrocarburieren und/oder Kolsterieren und/oder Niedertemperatur-Gasnitrieren und/oder Oxynitrieren, hergestellt ist.

8. Kraftstoffkolbenpumpe nach Anspruch 7 **dadurch gekennzeichnet, dass** die Schicht (168) bis in eine Tiefe von 5µm bis 50µm in die Ankerwelle (16) hineinreicht.

9. Kraftstoffkolbenpumpe nach einem der Anspruch 4 bis 8, **dadurch gekennzeichnet, dass** das Grundmaterial (169) der Ankerwelle (16) ein magnetisierbarer, kaltverfestigter und/oder ferritischer Stahl und/oder eine Eisen-Cobalt-Legierung ist.

10. Kraftstoffkolbenpumpe nach einem der vorangehenden Ansprüche, **dadurch gekennzeichnet, dass** die Ankerwelle (16) im Ankerbereich (161) eine oder mehrere, insbesondere zwei, in axialer Richtung verlaufende Durchgangsbohrungen (164) aufweist.

11. Kraftstoffkolbenpumpe nach einem der vorangehenden Ansprüche, **dadurch gekennzeichnet, dass** das Mengensteuerventil (14) ein Gehäuse aufweist, an dem Anschläge (163,17) ortsfest vorgesehen sind, an denen die Ankerwelle (16) bei Bewegung in beiden axialen Richtungen zur Anlage kommt.

12. Kraftstoffkolbenpumpe nach einem der vorangehenden Ansprüche, **dadurch gekennzeichnet**, **dadurch gekennzeichnet, dass** die Ankerwelle (16), gegebenenfalls abgesehen von einer oberflächlichen Schicht (168), aus einem homogenen Grundmaterial (169) besteht.

## Claims

1. Piston-type fuel pump having an electromagnetically actuable rate control valve (14) as an inlet valve of the piston-type fuel pump (3) for controlling the delivery rate of the piston-type fuel pump (3), having an electromagnet (15), a valve element (26) movable in an axial direction for opening and closing the rate control valve (14), and furthermore having an armature shaft (16) for transmitting a force, which is produced by the electromagnet (15) and acts on the valve element (26) in the axial direction, wherein the armature shaft (16) has a needle region (162) facing the valve element (26) and an armature region (161) remote from the valve element (26), wherein the needle region (162) and the armature region (161) are formed integrally with one another and wherein the needle region (162) has a smaller diameter than the armature region (161), **characterized in that** a rounded portion (167) of the edge (166) situated at the transition (165) between the needle region (162) and the armature region (161) is provided and **in that** the rounded portion (167) has a first partial rounded portion (167a) facing the needle region (162) and having a first rounding radius (r1) and a second partial rounded portion (167b) facing the armature region (161) and having a second rounding radius (r2), and **in that** the first rounding radius (r1) is at least 5 times the second rounding radius (r2).

2. Piston-type fuel pump according to Claim 1, **characterized in that** the first partial rounded portion (167a) and/or the second partial rounded portion (167b) rounds off the edge (166) by at least a quarter in each case in respect of the angle (α) at which the needle region (162) merges into the armature region (161) at the edge (166).

3. Piston-type fuel pump according to Claim 1, **characterized in that** the rounding radius (r) decreases in a direction from the needle region (162) toward the armature region (161), in particular decreases continuously.

4. Piston-type fuel pump according to any of the preceding claims, **characterized in that**, at least along parts of the surface of the armature shaft (16), a layer is provided, the hardness of which is greater than the hardness of a base material (169) of the armature shaft (16).

5. Piston-type fuel pump according to Claim 4, **characterized in that** the hardness is at least 900 HV at least along the parts of the surface of the armature shaft (16).

6. Piston-type fuel pump according to Claim 4 or 5, **characterized in that**, at least along the parts of the surface of the armature shaft (16), a carbon and/or nitrogen content is higher in comparison with the base material (169) of the armature shaft (16).

7. Piston-type fuel pump according to any of Claims 4 to 6, **characterized in that** the layer (168) is produced by means of a low-temperature diffusion process, in particular by means of nitrocarburization and/or Kolsterizing and/or low-temperature gas nitriding and/or oxynitriding.

8. Piston-type fuel pump according to Claim 7, **characterized in that** the layer (168) extends into the armature shaft (16) to a depth of 5 µm to 50 µm.

9. Piston-type fuel pump according to any of Claims 4 to 8, **characterized in that** the base material (169) of the armature shaft (16) is a magnetizable, cold-hardened and/or ferritic steel and/or an iron-cobalt alloy.

10. Piston-type fuel pump according to any of the preceding claims, **characterized in that** the armature shaft (16) has one or more through holes (164), in particular two through holes, extending in the axial direction in the armature region (161).

11. Piston-type fuel pump according to any of the preceding claims, **characterized in that** the rate control valve (14) has a housing on which stops (163, 17) are provided in fixed locations, against which stops the armature shaft (16) comes to rest in the case of movement in both axial directions.

12. Piston-type fuel pump according to any of the preceding claims, **characterized in that** the armature shaft (16) is composed of a uniform base material (169), apart from a surface layer (168) if required.

## Revendications

1. Pompe à carburant à piston, comprenant une soupape de commande de débit (14) à actionnement électromagnétique comme soupape d'entrée de la pompe à carburant à piston (3) destinée à commander le débit de refoulement de la pompe à carburant à piston (3), un électroaimant (15), un élément de soupape (26), mobile dans une direction axiale, destiné à ouvrir et à fermer la soupape de commande de débit (14), et en outre un arbre d'induit (16) destiné à transmettre à l'élément de soupape (26) une force axiale produite par l'électroaimant (15) et agissant dans la direction axiale, l'arbre d'induit (16) présentant une zone d'aiguille (162) tournée vers l'élément de soupape (26) et une zone d'induit (161) détournée de l'élément de soupape (26), la zone d'aiguille (162) et la zone d'induit (161) étant réalisées ensemble d'un seul tenant, et la zone d'aiguille (162) présentant un diamètre inférieur par rapport à la zone d'induit (161), **caractérisée en ce qu'**un arrondi (167) du bord (166) se trouvant à la transition (165) entre la zone d'aiguille (162) et la zone d'induit (161) est prévu, et **en ce que** l'arrondi (167) présente un premier arrondi partiel (167a) tourné vers la zone d'aiguille (162) et ayant un premier rayon d'arrondi (r1) et un deuxième arrondi partiel (167b) tourné vers la zone d'induit (161) et ayant un deuxième rayon d'arrondi (r2), et **en ce que** le premier rayon d'arrondi (r1) présente au moins 5 fois la valeur du deuxième rayon d'arrondi (r2).

2. Pompe à carburant à piston selon la revendication 1, **caractérisée en ce que** le premier arrondi partiel (167a) et/ou le deuxième arrondi partiel (167b) arrondissent le bord (166) respectivement d'au moins un quart par rapport à l'angle (α) selon lequel la zone d'aiguille (162) passe à la zone d'induit (161) au niveau du bord (166).

3. Pompe à carburant à piston selon la revendication 1, **caractérisée en ce que** le rayon d'arrondi (r) diminue, en particulier en continu, dans la direction de la zone d'aiguille (162) vers la zone d'induit (161).

4. Pompe à carburant à piston selon l'une quelconque des revendications précédentes, **caractérisée en ce qu'**au moins le long de certaines parties de la surface de l'arbre d'induit (16), une couche est prévue dont la dureté est supérieure à la dureté d'un matériau de base (169) de l'arbre d'induit (16).

5. Pompe à carburant à piston selon la revendication 4, **caractérisée en ce que** la dureté est d'au moins 900 HV, au moins le long des parties de la surface de l'arbre d'induit (16).

6. Pompe à carburant à piston selon la revendication 4 ou 5, **caractérisée en ce qu'**au moins le long des parties de la surface de l'arbre d'induit (16), une teneur en carbone et/ou en azote est élevée en comparaison avec le matériau de base (169) de l'arbre d'induit (16).

7. Pompe à carburant à piston selon l'une quelconque des revendications 4 à 6, **caractérisée en ce que** la couche (168) est fabriquée au moyen d'un processus de diffusion basse température, en particulier par nitrocarburation et/ou Kolsterising et/ou par nitruration gazeuse basse température et/ou par oxynitruration.

8. Pompe à carburant à piston selon la revendication 7, **caractérisée en ce que** la couche (168) pénètre dans l'arbre d'induit (16) jusqu'à une profondeur de 5 µm à 50 µm.

9. Pompe à carburant à piston selon l'une quelconque des revendications 4 à 8, **caractérisée en ce que** le matériau de base (169) de l'arbre d'induit (16) est un acier magnétisable, écroui et/ou ferritique et/ou un alliage de fer et de cobalt.

10. Pompe à carburant à piston selon l'une quelconque des revendications précédentes, **caractérisée en ce que** l'arbre d'induit (16) présente dans la zone d'induit (161) un ou plusieurs, en particulier deux, perçages traversants (164) s'étendant dans la direction axiale.

11. Pompe à carburant à piston selon l'une quelconque des revendications précédentes, **caractérisée en ce que** la soupape de commande de débit (14) présente un corps sur lequel des butées (163, 17) sont prévues de manière stationnaire et contre lesquelles l'arbre d'induit (16) s'applique lors d'un mouvement dans les deux directions axiales.

12. Pompe à carburant à piston selon l'une quelconque des revendications précédentes, **caractérisée en ce que** l'arbre d'induit (16) est composé d'un matériau de base homogène (169), éventuellement à l'exception d'une couche superficielle (168).
